# EUROPEAN PATENT APPLICATION

(11) **EP 4 756 716 A1**
(43) Date of publication of application: **10.06.2026**
(21) Application number: 24218363.0
(22) Date of filing: 09.12.2024
(51) Int. Cl.: G06T 7/30, G06T 7/33

(54) **METHOD AND SYSTEM FOR COMPARING DIGITAL 3D MODELS OF TEETH**

(71) Applicant: 3Shape A/S, 1060 Copenhagen K (DK)
(72) Inventor: RASTKHADIV, Saleh, 1060 Copenhagen K (DK); HUSEINI, Admir, 1060 Copenhagen K (DK); ALALOUF, Daniella, 1060 Copenhagen K (DK); BAK, Maja, 1060 Copenhagen (DK); CEBOV Aleksander, 1060 Copenhagen K (DK); KURALT, Marko, 1060 Copenhagen K (DK); STOUSTRUP, Asger, 1060 Copenhagen K (DK); CINELLI, Ester, 1060 Copenhagen K (DK); LUNEAU, Elise, 1060 Copenhagen K (DK)
(74) Representative: Zacco Denmark A/S

(57) **Abstract**

A computer-implemented method for comparing digital 3D dental models is disclosed, wherein the method comprises receiving a first digital 3D dental model representative of a dental situation at a first time, receiving a second digital 3D dental model representative of the dental situation at a second time, wherein the second time is later than the first time. Further, the method comprises generating a difference map based on the first digital 3D dental model and the second digital 3D dental model, where generating of the difference map comprises obtaining values of geometric differences between the first digital 3D dental model and the second digital 3D dental model, identifying a greatest value of geometric differences from the values of geometric differences, generating a color scale comprising a plurality of discrete colors associated with the values of geometric differences, wherein colors of the plurality of discrete colors are separated by color scale threshold values, further wherein the color scale threshold values are generated based on the greatest value of geometric differences, and assigning the plurality of discrete colors to the values of geometric differences. The method further comprises displaying the difference map to visually highlight the values of geometric differences between the first digital 3D dental model and the second digital 3D dental model.

## Description

### Technical field

The disclosure relates to a method and system for comparing digital 3D dental models representing patients teeth at different points in time.

### Background

Development of intraoral scanning techniques has been instrumental in the transition to modern digital dentistry. Use of 3D intraoral scanners (IOS) allows dental practitioners to accurately and quickly capture dental situation of a patient, which may then be visualized on a display as a digital three-dimensional (3D) dental model. Obtained digital 3D dental model may thus serve as a digital impression of teeth and gingiva, offering numerous advantages over a classical physical impression of teeth.

A significant advantage offered by the use of intraoral scanners is reflected in improved accuracy and precision of the digital 3D dental models compared to traditional physical impressions. A series of digital 3D dental models of the dental situation of the same patient may be obtained over a course of time. The accuracy of these digital 3D dental models therefore allows for very precise mutual comparison of the digital 3D dental models for the purpose of identifying various changes in the dentition, including discovering and tracking changes in teeth and/or gingiva movement over time and changes in tooth shape change.

These identified changes may be visually conveyed to a user. One of the challenges with currently existing tools for identifying and presenting changes in digital 3D dental models is that the changes are presented according to pre-defined rules set in software. Specifically, current tools and methods to visually present severity levels of identified changes are not adaptable to the specifics of the digital 3D dental models being compared. Instead, those current methods are built on assumptions that are pre-defined, rigid and overall sub-optimal for use across a broad range of various scenarios. In some cases, the user may be able to adjust the tools and thereby to tailor the existing solutions according to their specific requirements, however this represents a burden as it needs to be performed continuously over time. Additionally, the user needs in-depth knowledge of the tools to be able to adjust the parameters of existing solutions. Furthermore, current solutions lack a feedback mechanism to inform the user whether their manual adjustment is optimal, for example with respect to quality of scan data or variability of digital 3D dental models. All these challenges may lead to the improper setting of the comparison tools parameters, which leaves users unable to correctly extract clinically-valuable information. These issues can lead to sub-optimal analysis of compared 3D digital models or to overlooking important changes.

The present disclosure addresses the above-mentioned challenges and presents an adaptable comparison tool for identifying and presenting relevant changes, specifically tailored for the digital 3D models being compared. Users of the presented solution are provided with a seamless experience removing the need for manual adjustment of comparison parameters. Users are furthermore provided with accurate and intuitive results of comparing digital 3D dental models in a time-efficient manner.

### Summary

In an embodiment, a computer-implemented method for comparing digital 3D dental models is disclosed, the method comprising:
- receiving a first digital 3D dental model representative of a dental situation at a first time,
- receiving a second digital 3D dental model representative of the dental situation at a second time, wherein the second time is later than the first time,
- generating a difference map based on the first digital 3D dental model and the second digital 3D dental model, wherein generating the difference map comprises:
   - obtaining values of geometric differences between the first digital 3D dental model and the second digital 3D dental model,
   - identifying a greatest value of geometric differences from the values of geometric differences,
   - generating a color scale comprising a plurality of discrete colors associated with the values of geometric differences, wherein colors of the plurality of discrete colors are separated by color scale threshold values, further wherein the color scale threshold values are determined based on the greatest value of geometric differences,
   - assigning the plurality of discrete colors to the values of geometric differences, and
- displaying the difference map to visually highlight the values of geometric differences between the first digital 3D dental model and the second digital 3D dental model.

Expression "3D" throughout the present disclosure refers to the term "three-dimensional". Term "digital 3D dental model" refers to a digital, three-dimensional, computer-generated representation of a patient's dental situation. Such digital 3D dental model may accurately correspond to the patient's actual dental situation. That means that dental objects like teeth, teeth surfaces, restorations and/or gingiva on the digital 3D dental model may correspond to those of the actual dental situation.

A digital 3D dental model may be constructed by a processor of a dental scanning system, based on scan data collected in an intraoral scanning process in which an intraoral 3D scanner may be used to scan the patient's dental situation comprising teeth and gingiva. The intraoral 3D scanner throughout the disclosure is also referred to as the intraoral scanner (IOS). The digital 3D dental model can be stored in a memory of a computer system, for example in a Standard Triangle Language (STL) format or in any other format for displaying or printing 3D objects.

The digital 3D dental model can be received or accessed by the processor. The digital 3D dental model may usually be displayed on a display screen of the dental scanning system in form of a 3D mesh, representing surfaces of teeth and gingival tissue of the dental situation. The 3D mesh may be comprised of individual facets, for example triangular facets while each facet may comprise, for example, three mutually connected vertices. Alternatively, the digital 3D dental model may be displayed as a point cloud comprising points, a graph comprising nodes and edges, a volumetric representation comprising voxels, or any other suitable 3D representation form.

The method may comprise receiving the first digital 3D dental model representative of the dental situation at the first time. This first digital 3D dental model may be generated, for example, based on scan data obtained during the patient's first visit to a dental clinic. Characteristics such as shape of teeth and/or mutual teeth positions may thereby be obtained and reflected in the first digital 3D dental model, which can also be referred to as a baseline model or a baseline scan.

The method may further comprise receiving the second digital 3D dental model representative of the dental situation at the second time, wherein the second time is later than the first time. The second digital 3D dental model may be generated, for example, based on scan data obtained during the patient's subsequent visit to a dental clinic, for example in a time frame of six months to one year after the first visit to the dental clinic. During this time period, shape of certain teeth may have changed and/or teeth may have moved compared to their baseline positions at the first visit. Change in shape of the teeth may occur due to tooth wear, tooth breakage and/or accumulation of plaque. Additionally, change in soft tissue (gingiva) movement may be observed at the subsequent visit, compared to the first visit. Changes in gingiva movement may occur due to inflammation of the gingiva or due to gingival recession, both of which are important to be registered and accurately measured.

The method may further comprise generating the difference map based on the first digital 3D dental model and the second digital 3D dental model. The difference map may comprise a superimposed digital 3D dental model visualizing the differences between the first digital 3D dental model and the second digital 3D dental model. The difference map may further comprise a color scale used to interpret the visualized differences on the superimposed digital 3D dental model.

Generally, a difference map of two 3D models is a visual representation that can be used to compare the two 3D datasets. It may highlight the differences between two 3D models by computing the differences in their spatial or property values at each point. This process may result in a new map or a new 3D model showing where and how the two 3D models differ. The difference map may show the magnitude and, if desirable, the direction of the differences at each point in 3D space. This often may be represented using color coding, where different colors are used to highlight areas of greater or lesser change. By generating the difference map a severity of the differences between the first digital 3D dental model and the second digital 3D dental model may be evaluated.

Generating the difference map may comprise obtaining the values of geometric differences between the first digital 3D dental model and the second digital 3D dental model. This may be performed by mutually subtracting the first digital 3D dental model and the second digital 3D dental model, so either subtracting the second digital 3D dental model from the first digital 3D dental model or vice versa. The values of geometric differences may be expressed as positive numbers only, or both as positive and negative numbers, where negative numbers indicate that a difference/change occurs in an opposite direction to those expressed with positive numbers.

Further, generating the difference map may comprise identifying the greatest value of geometric differences from the values of geometric differences. The greatest value may be a global maximum of the values of geometric differences. For example, the greatest value may be a maximum value of the values of geometric differences if these differences are expressed as positive numbers only. The greatest value may be selected as a greater value of an absolute maximum value of the values of geometric differences and an absolute minimum value of the values of geometric differences, if these differences are expressed as both positive and negative numbers. Identification of the greatest value may comprise identifying a data bound that comprises most of the values of geometric differences. For this, a portion of the values of geometric differences with too big absolute values (outlier data) may be removed. Therefore, it may be advantageous to recognize the outlier data, in order to exclude it from the identification of the greatest value. This will be further addressed in the disclosure.

Generating the difference map may further comprise generating the color scale comprising the plurality of discrete colors associated with the values of geometric differences, wherein the colors of the plurality of discrete colors are separated by color scale threshold values. The color scale threshold values may be determined based on the greatest value of geometric differences. The color scale threshold values may be those values of geometric differences at which a transition of the colors from the plurality of discrete colors occurs. The plurality of discrete colors may be assigned to the values of geometric differences.

Generating the difference map in this manner enables setting of an individually-tailored comparison tool for the specific pair of digital 3D dental models being compared. So-generated difference map displays severity overview of geometric differences that is case-specific and provides context to the analyzed dental situation, therefore being of great clinical value. Furthermore, the color scale of the difference map according to the disclosure removes any need for manual recalibration of thresholds as these are automatically set once the greatest value of geometric differences is known. This greatly saves time and effort as the users can focus more on analyzing results of the difference map instead of spending time on configuration of the sub-optimal difference maps. Overall, set up of the threshold values and color assignment in the difference map according to the disclosure are automatically adjustable and specific to each pair of the digital 3D dental models being compared. The adjustability of the difference map according to the disclosure is a further advantage because a universally applicable comparison tool is available to the users, irrespective of the nature of geometric differences in the digital 3D dental models being compared.

The method may further comprise displaying the difference map to visually highlight the values of geometric differences between the first digital 3D dental model and the second digital 3D dental model. Thus, the evaluated severity of the differences between the two digital 3D dental models may be conveyed to the user.

In an embodiment, generating the difference map may comprise generating the superimposed digital 3D dental model by aligning the first digital 3D dental model and the second digital 3D dental model. Aligning may comprise globally (on a scan-level) aligning the first digital 3D dental model and the second digital 3D dental model, or locally (on tooth-level) aligning the first digital 3D dental model and the second digital 3D dental model. As a result of the local alignment, corresponding teeth of the first digital 3D dental model and the second digital 3D dental model are more accurately aligned to each other compared to global alignment. Aligning the first digital 3D dental model and the second digital 3D dental model may comprise, for example, use of an Iterative Closest Point (ICP) algorithm and/or use of individual coordinate systems of teeth called tooth poses. Corresponding teeth of the first digital 3D dental model and the second digital 3D dental model may refer to teeth with the same Universal Numbering System (UNN) dental notation.

Alignment may be understood as a rigid alignment of the two digital 3D dental models in the common three-dimensional space.

The method may further comprise determining, on the superimposed digital 3D dental model, the values of geometric differences between the first digital 3D dental model and the second digital 3D dental model. The geometric differences may be distances between corresponding points of the first digital 3D dental model and the second digital 3D dental model. The corresponding points may be the closest points between the first digital 3D dental model and the second digital 3D dental model. These values may be expressed as positive numbers only, or both as positive and negative numbers. For example, in some cases it may be relevant to reflect a change with a positive number, such as when a plaque layer is accumulated on a tooth, or with a negative number such as when tooth material is lost due to tooth wear.

Displaying the difference map may comprise displaying the first digital 3D dental model, the second digital 3D dental model or a combination of the first digital 3D dental model and the second digital 3D dental model so that the values of geometric differences are highlighted according to the assigned color coding. It may be preferable to display the second digital 3D dental model, or more generally, the most recent digital 3D dental model as this may be most intuitive for the user.

In an embodiment, aligning the first digital 3D dental model and the second digital 3D dental model may comprise performing a global alignment in which absolute values of changes between the first digital 3D dental model and the second digital 3D dental model may be determined. This global alignment may also be referred to as a model-to-model alignment, scan-to-scan alignment or jaw-to-jaw alignment. This type of alignment may be performed, for example, by performing a best-fit transformation in which centroids of corresponding teeth of the first digital 3D dental model and the second digital 3D dental model are overlapped. The best-fit transformation is a rigid transformation which, when applied to teeth centroids of the first digital 3D dental model, minimizes the sum of squared distances to teeth centroids of the second digital 3D dental model. This best-fit transformation may be regarded as a jaw-to-jaw alignment as it is computed on the jaw level and not on the level of individual teeth. The obtained jaw-to-jaw alignment may be fine-tuned by performing an Iterative Closest Point (ICP) method considering selected teeth, for example molars, of the two digital 3D dental models.

The absolute values of changes between the first digital 3D dental model and the second digital 3D dental model may be changes in tooth movement and/or changes in soft tissue (gingiva) movement. The absolute values of changes may thereby give insight into whether teeth follow an orthodontic prescription, or an insight into the patient's gingivitis and/or gingival recession status.

The geometric differences, in case of the performed global alignment, may reflect changes in tooth positioning between the first digital 3D dental model and the second digital 3D dental model. These geometric differences may additionally or alternatively reflect changes in gingiva line (or margin line) between the first digital 3D dental model and the second digital 3D dental model.

In an example, the greatest value of geometric differences from the values of geometric differences may be identified based on the global alignment of the first digital 3D dental model and the second digital 3D dental model. As these values may be positive numbers only, the greatest value of geometric differences may be found by identifying the maximum value.

In another embodiment, aligning the first 3D dental model and the second 3D dental model may comprise performing a local alignment where teeth of the first 3D dental model are individually aligned with corresponding teeth of the second 3D dental model. This may be achieved by aligning tooth poses of all of the corresponding teeth of the first and second digital 3D dental model. A tooth pose is a coordinate system originating at the tooth centroid with axes corresponding to the principal axes of the tooth. In this embodiment, the greatest value from the values of geometric differences may be identified based on the local alignment.

The geometric differences, in case of performed local alignment, may reflect changes in tooth shape between the first digital 3D dental model and the second digital 3D dental model.

Generally, aligning the first digital 3D dental model and the second digital 3D dental model may comprise utilizing an Iterative Closest Point (ICP) algorithm. The ICP algorithm is an iterative algorithm and may comprise a number of iterations of identifying corresponding tooth regions and minimizing the distances between the identified tooth regions, until the algorithm converges to a desired result.

Identifying the greatest value of geometric differences may comprise:
- generating a histogram of frequencies for the values of geometric differences,
- computing a variance of frequencies based on the histogram of frequencies,
- obtaining filtered values of geometric differences by filtering the values of geometric differences using at least a portion of the computed variance,
- identifying a minimum value and a maximum value from the filtered values of geometric differences, and
- identifying an absolute maximum of the minimum value and the maximum value. For example, the maximum value may be 0.6 millimeters and the minimum value may be -0.65 millimeters. In this case, the absolute maximum is therefore -0.65. In this way, the histogram of frequencies may be used to identify outlier data. Once identified, the outlier data may be filtered out and so disregarded from the process of identifying the greatest value of geometric differences.

This filtering process may be performed to cut off outlier and/or noise datapoints and thereby to find the filtered values of geometric difference representing the useful bound of the values. The filtering may be used just for the purpose of identifying the greatest value of geometric differences, while the outlier data may still be displayed on the difference map, for example using the closest color of the color scale. For example, if value 2 is the greatest value of the geometric differences and value 6 is an outlier value, a region of the difference map corresponding to the outlier value may be displayed with the color of the color scale used to represent the value 2.

Filtering of the values of geometric differences using the at least portion of the computed variance may comprises excluding, from the identification of the greatest value, those values of geometric differences with associated probability value lower than a first threshold. The first threshold may be the at least portion of the computed variance. The at least portion of the computed variance may be obtained as: k * computed variance, where a factor k is a positive value.

In an example, the color scale of the difference map may be symmetric. This means that the thresholds of the color scale may be determined within the range defined by the greatest value and a negative value of the greatest value.

In an example, the color scale may comprise a plurality of sub-ranges. These sub-ranges are mutually separated by the color scale threshold values. A discrete step in each sub-range of the plurality of sub-ranges may correspond to a measuring precision of the intraoral scanner used to scan the dental situation. The measuring precision of the intraoral scanner may be received, for example by the processor for performing the method of the disclosure. The measuring precision of the intraoral scanner may be known in advance. All sub-ranges of the plurality of sub-ranges may be equal i.e. spanning the same range of values.

In an example, a number of sub-ranges may be increased if a surface area on the difference map covered by a sub-range of the plurality of sub-ranges is greater than a second threshold value. In some cases a sub-range may be wide, for example covering a large area of the difference map such that it may be difficult to observe clinically-relevant differences on the difference map. To counter that, the number of sub-ranges may be increased, for example by splitting the sub-ranges further in two or more sub-ranges. In this way it is ensured that a single sub-range, represented by a single color of the plurality of discrete colors of the color scale, is not hindering displaying of the severity representation of other relevant geometric differences. The second threshold therefore relates to a surface area of the difference map. This second threshold may be pre-defined or may be adjustable by the user.

In an embodiment, the method may further comprise arranging a timeline in a graphical user interface (GUI) where the superimposed digital 3D dental model is displayed. The timeline may indicate which digital 3D dental models are compared, for example the first digital 3D dental model and the second digital 3D dental model. The timeline may be interactive and may allow the user to manually select the digital 3D dental models selected for comparison.

The method of the disclosure may further comprise:
- receiving a user selection indicating a further digital 3D dental model for comparison,
- receiving a user selection indicating the first digital 3D dental model or the second digital 3D dental model for comparison with the further digital 3D dental model,
- generating a difference map based on the further digital 3D dental model and the first digital 3D dental model or the second digital 3D dental model, and
- displaying the difference map to visually highlight the differences between the further digital 3D dental model and either the first digital 3D dental model or the second digital 3D dental model.

The method may further comprise updating the color scale threshold values based on the differences between the further digital 3D dental model and the first digital 3D dental model or the second digital 3D dental model. In this way, the user selection of the digital 3D dental models for comparison triggers the generation of the difference map specifically tailored to those digital 3D dental models selected for comparison.

In an embodiment, a dental scanning system is disclosed comprising a data processing device configured to carry out a method according to one or more embodiments of the disclosure.

In a further embodiment, a computer-readable storage medium is disclosed. The computer-readable medium, for example a non-transitory computer readable medium, may carry instructions which, when executed by a computer, cause the computer to carry out the method according to one or more embodiments of the disclosure.

Further according to the disclosure, a computer program product is disclosed comprising instructions which, when the program is executed by a computer, causes the computer to carry out any method according to the disclosure.

### Brief description of the figures

FIG. 1 illustrates a first digital three-dimensional model and a second digital three-dimensional model of patient's teeth for which comparison is desired;
FIG. 2 illustrates a flowchart of a method according to an embodiment of the disclosure;
FIG. 3 illustrates a graphical user interface (GUI) with a view of a difference map indicating tooth shape change between the first digital 3D dental model and the second digital 3D dental model;
FIG. 4 illustrates a graphical user interface (GUI) with a view of a difference map indicating tooth movement and gingiva movement between the first digital 3D dental model and the second digital 3D dental model;
FIG. 5 illustrates a histogram of frequencies for values of geometric differences in the difference map used for identifying outlier data and/or noise data;
FIG. 6 illustrates a graphical user interface (GUI) with a view of the difference map on a tooth level, indicating tooth shape change between the first digital 3D dental model and the second digital 3D dental model;
FIG. 7 illustrates a dental scanning system according to the disclosure;
FIG. 8 illustrates an example of a computer architecture of a computer capable of carrying out a method according to the disclosure.

### Detailed description

In the following description, reference is made to the accompanying figures, which show by way of illustration how the invention may be practiced.

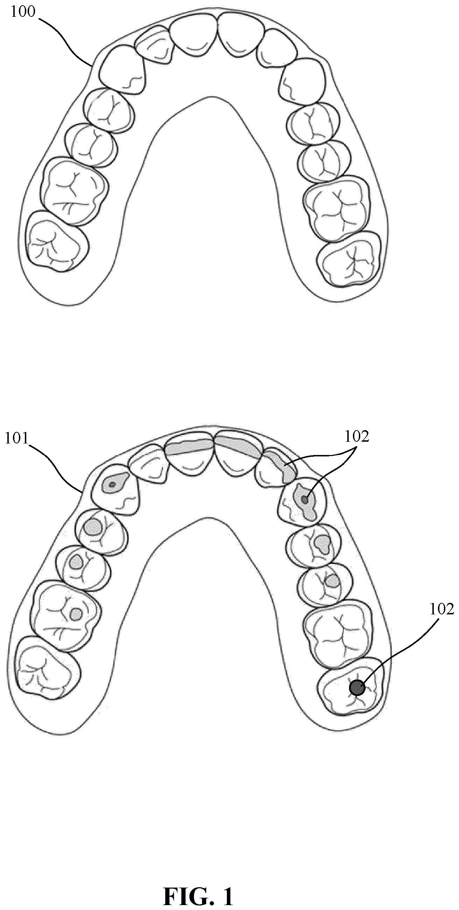

FIG. 1 illustrates a first digital three-dimensional (3D) dental model 100 of patient's teeth and a second digital three-dimensional (3D) dental model 101 of the same patient's teeth. The first digital 3D dental model 100 may be obtained by scanning the patient's teeth, with a three-dimensional (3D) scanner, for example with an intraoral 3D scanner 701, at a first time such as a first visit to a dental clinic. The second digital 3D dental model 101 may be obtained by scanning the patient's teeth a second time, later than the first time, for example during a subsequent visit to the dental clinic.

In between the first visit and the second visit to the dental clinic, the patient may have suffered from a dental condition such as tooth wear, gingival recession or accumulation of dental plaque. In FIG. 1 darker surfaces 102 on teeth of the second digital 3D dental model 101 represent a loss in tooth material due to tooth wear, where a darker color is used to illustrate more severe tooth wear. Thus, a difference in surface geometry between the first and second digital 3D dental models 100, 101 may exist. The difference in surface geometry may be a result of change in anatomy of teeth due to tooth wear, as illustrated in FIG. 1. Additionally or alternatively, the difference in surface geometry between the first and second digital 3D dental models 100, 101 may be a result of a change in soft tissue (gingiva) movement and/or due to a change in tooth movement in the period from the first time to the second time. Gingiva movement may be observed by observing movement of a margin line which is the terminal edge of gingiva surrounding the teeth in collar like fashion. Other dental conditions such as accumulation of tooth plaque or tartar may additionally cause the change in geometry of the first and the second digital 3D dental models 100, 101. While FIG. 1 illustrates only the patient's upper jaw, however the first and/or second digital 3D dental models 100, 101 may comprise additionally or alternatively the lower jaw.

For accurate quantification and visualization of the changes in the dental situation of the patient, it may be desired to mutually compare the first digital 3D dental model 100 and the second digital 3D dental model 101. This may be required for diagnostic purposes, such as for determining presence or progression of dental conditions such as tooth wear, caries, dental plaque, tooth cracks, gingivitis and/or dental recession. Comparison of the two digital 3D dental models 100, 101 may be required to detect tooth movement, in order to plan an orthodontic treatment, evaluate the progress of an orthodontic treatment and/or to plan for other dental procedures.

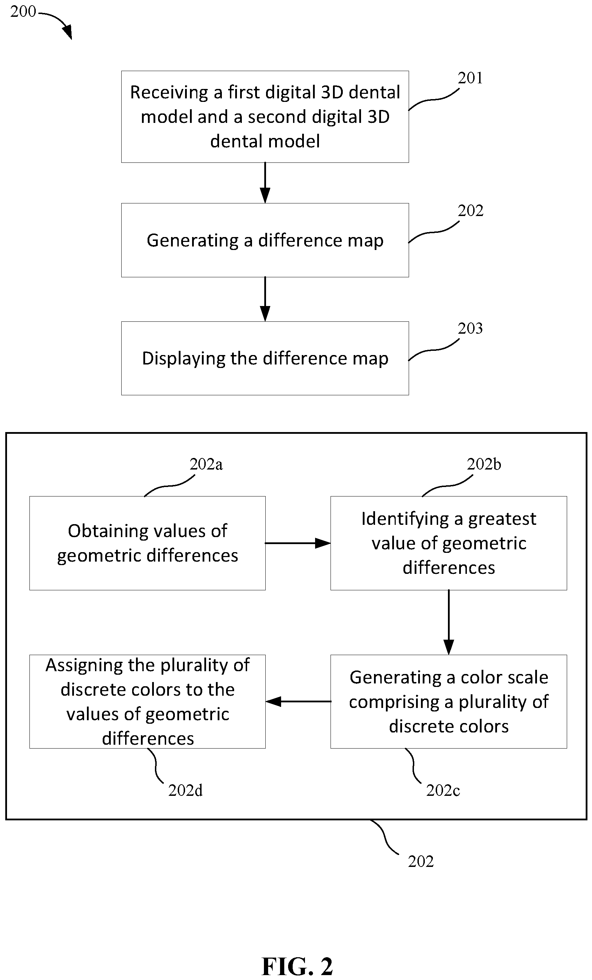

FIG. 2 illustrates a flowchart of a method for comparing digital 3D dental models according to an embodiment of the disclosure. In step 201, the first digital 3D dental model 100 and the second digital 3D dental model 101 may be received, for example by a processor of a dental scanning system 700. These two digital 3D dental models may be received based on a user selection or may be automatically loaded into the algorithm for comparing digital 3D dental models. For example, the method for comparing digital 3D dental models may be triggered automatically after an intraoral scanning process is completed, in which scan data is collected for generating the second digital 3D dental model 101. At that time, the first digital 3D dental model 100 may already be stored in a memory of the dental scanning system 700.

In step 202 of FIG. 2 the difference map may be generated based on the received first digital 3D dental model 100 and the second digital 3D dental model 101. The difference map may also be referred to as a difference color map because it visually highlights the differences between the digital 3D dental models being compared using a plurality of colors. A difference map between two 3D models may be generated by computing distances between corresponding points of the digital 3D dental models being compared. For this purpose, the digital 3D dental models being compared may be mutually aligned in a common digital 3D space. The difference map may show the magnitude and, if desirable, the direction of the differences at each point in the common digital 3D space. Both the magnitude and the direction of the differences may be visualized using color coding, where different colors highlight areas of greater or lesser change.

Generating the difference map (step 202) may comprise sub-steps 202a-202d, as illustrated in FIG. 2. Sub-step 202a illustrates obtaining values of geometric differences between the first digital 3D dental model 100 and the second digital 3D dental model 101, for example by mutually subtracting the first digital 3D dental model 100 and the second digital 3D dental model 101. This means that the second digital 3D dental model 101 may be subtracted from the first digital 3D dental model 100 or that the first digital 3D dental model 100 may be subtracted from the second digital 3D dental model 101.

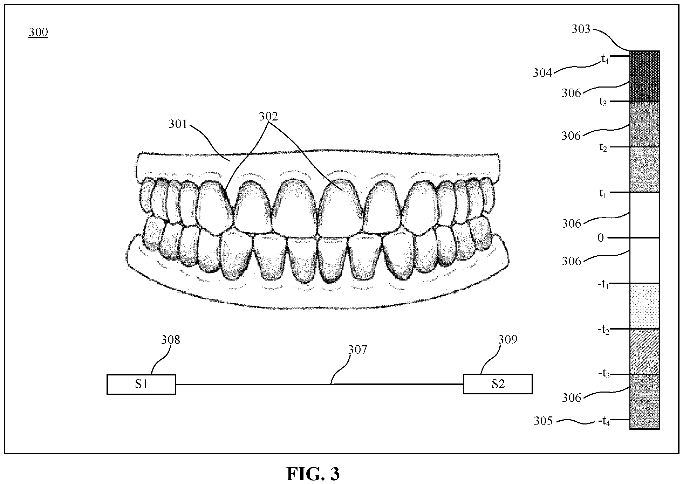

Further, in sub-step 202b, a greatest value of geometric differences may be identified from the values of geometric differences. In sub-step 202c, a color scale 303 may be generated, comprising a plurality of discrete colors mutually separated in the color scale 303 by color scale thresholds (indicated with -t₄ to t₄ in FIG. 3). The threshold values may be determined based on the identified greatest value of geometric differences. Discrete colors may be solid colors without any gradient present. Instead of discrete colors, color gradients may be used.

The effect of determining the color scale thresholds based on the identified greatest value of geometric differences is that the color scale 303 is specific to the two digital 3D dental models 100, 101 being compared. This is the advantage over prior art color scales which use pre-set thresholds including pre-set minimum and maximum values. Such pre-set minimum and maximum values don't present an optimum solution for multiple various cases of digital 3D dental models for which comparison is desired. Such pre-set values may therefore cause confusion with the user and may lead to inability to pinpoint and observe all clinically relevant differences in each specific comparison case. In the solution of the disclosure there is no pre-determined color scale which may result in generating non-optimized difference maps. Instead, the color scale of the difference map is created and adjusted specifically for the digital 3D dental models being compared. In sub-step 202d of FIG. 2, the plurality of discrete colors may be assigned to the values of geometric differences.

In step 203 of FIG. 2, the difference map may be displayed, for example on a display unit of the dental scanning system 700. In this way, information about the determined differences between the two digital 3D dental models being compared is conveyed to the user with the optimal indication of severity of the determined differences.

FIG. 3 illustrates a graphical user interface (GUI) 300 and therein a view of the difference map where corresponding teeth of the first digital 3D dental model 100 and the second digital 3D dental model 101 are compared. The difference map in this case comprises the superimposed digital 3D dental model 301 highlighting the geometric differences in tooth shape between teeth of the digital 3D dental models 100, 101 being compared. These differences may be highlighted by applying color overlays 302 to regions of the superimposed digital 3D dental model 301 where the differences have been detected. Different colors may be applied depending on the values of the respective differences. The difference map may further comprise the color scale 303 indicating colors used for representing the values of geometric differences on the superimposed digital 3D dental model 301. In the case of FIG. 3 the superimposed digital 3D dental model 301 is shown with jaws in occluded state, however a state where two jaws are open such that occlusal surfaces are displayed may additionally or alternatively be shown.

The superimposed digital 3D dental model 301 in FIG. 3 illustrates differences in teeth shape between the two digital 3D dental models 100, 101. Differences in tooth movement or gingiva movement are not shown on the difference map of FIG. 3. This is due to the alignment of the first digital 3D dental model 100 and the second digital 3D dental model 101 performed on the individual tooth level. The digital 3D dental models 100, 101 may be segmented in order to identify dental objects such as individual teeth. Subsequently, the corresponding teeth of the digital 3D dental models 100, 101 may be mutually aligned. Corresponding teeth may be understood as teeth having the same Universal Numbering System/Notation (UNN) mark.

Segmenting the digital 3D dental models 100, 101 may be performed via a segmentation process which allows for identification of distinct dental objects such as individual teeth and/or surrounding gingiva in the digital 3D dental model. Individual teeth can be assigned a tooth identifier, for example according to the Universal Numbering Notation (UNN) in which numerals 1 to 32 are assigned to human teeth. The segmentation process may comprise use of algorithms such as Principal Component Analysis (PCA) or harmonic fields. The segmentation process may alternatively or additionally comprise use of machine learning models.

To generate the color scale 303 for the superimposed digital 3D dental model 301 following steps may be carried out. The values of geometric differences between the first digital 3D dental model 100 and the second digital 3D dental model 101 may be determined. Out of those determined values, the greatest value of geometric differences may be identified. For example, a maximum value within the values of geometric differences may be a value of 2 millimeters and a minimum value may be a value of -1 millimeter. A convention may be adopted that the positive values of geometric differences signify accumulation of material on individual teeth, such as accumulation of dental plaque over time. Additionally, negative values of geometric differences may signify loss of material on individual teeth, for example due to tooth wear or tooth breakage over time. Next, absolute values of the maximum value and the minimum value may be compared. The greater of the two may then be selected as the greatest value of geometric differences and may be selected as a highest threshold value 304 of the color scale 303 (threshold t₄ in FIG. 3). Thus, in the example of FIG. 3 and considering the mentioned values of 2 and -1 millimeters, the highest threshold value 304 of the color scale 303 may be assigned the value of 2 millimeters. Lowest value 305 (threshold -t₄) of the color scale 303 may be selected as a negative value of the highest value 304, in this case it may be a value of - 2 millimeters. The color scale 303 may thus be made symmetric over its range, with the value 0 being in the center of the color scale 303. Other thresholds of the color scale 303 (e.g. t₃, t₂,t₁, t₋₁, t₋₂, t-₃) may be determined automatically once the highest value 304 and the lowest value 305 are known. Each sub-range 306 of values in the color scale 303 in between two thresholds may be equally wide. Number of sub-ranges in the color scale 303 may be predetermined, with 8 sub-ranges 306 in total shown in FIG. 3. Instead of 8 sub-ranges 306, 10 or more sub-ranges may be utilized.

It may be observed that the highest value 304 and the lowest value 305 of the color scale 303 are determined based on the values of geometric differences between the two digital 3D dental models being compared, in this case between the first digital 3D dental model 100 and the second digital 3D dental model 101. The threshold values of the color scale 303 are thus not pre-defined. Several advantages are enabled by this feature. For one, if values of determined clinically-relevant differences would fall outside the range of a color scale with pre-set boundaries, those values can be captured and shown on the difference map according to the disclosure. This allows the users to discover and view the severe cases needing their attention, thus adding to clinical value of the difference map of the disclosure. Furthermore, once values 304 and 305 are determined, other threshold values in between the highest value 304 and the lowest value 305 may be determined automatically. These threshold values therefore alter according to the aligned digital 3D dental models being compared, removing any need for manual recalibration of thresholds. This greatly saves time and effort as the users can focus more on analyzing results of the difference map instead of spending time on configuration of the thresholds. Because the thresholds are determined for the specific pair of digital 3D dental models being compared, accuracy of data visualization and interpretation is improved. Moreover, users can immediately see relevant thresholds that adapt to the current digital 3D dental models being compared, making the graphical user interface 300 overall more intuitive.

On the color scale 303 of the FIG. 3 two sub-ranges 306 around the value zero represent "no change" state, namely the sub-range between threshold values 0 and t₁, and the sub-range between threshold values 0 and -t₋₁. Locations on the superimposed digital 3D dental model 301 corresponding to values of geometric differences within these sub-ranges may not be overlaid with a color and may instead be shown in the corresponding natural color. Alternatively, a color, for example green, may be used.

The color scale 303 of the FIG. 3 also enables values of geometric differences greater than t₄ and/or lower than t₋₄ to be shown on the difference map, for example in the color corresponding to the top-most sub-range 306 or the bottom-most sub-range 306.

FIG. 3 also illustrates a timeline 307 with indicators 308, 309 of digital 3D dental models being compared. Indicator 308 corresponds to the first digital 3D dental model 100 (S1 or scan 1), while the indicator 309 corresponds to the second digital 3D dental model 101 (S2 or scan 2). The indicators 308, 309 may be arranged in chronological order with the older scan (here S 1) arranged to the left of the timeline 307. This provides an intuitive view of the digital 3D dental models being compared as well as their corresponding time stamps. The user may hover over the indicators 308, 309 and obtain, for example in a pop-up, more information about the respective digital 3D dental model including date of scanning or overview of dental conditions identified for the particular scan.

The user may decide to include another digital 3D dental model into the comparison tool according to the disclosure. The user may thus select a further digital 3D dental model to be compared with either the first digital 3D dental model 100 or with the second digital 3D dental model 101. This selection of the further digital 3D dental model may occur by user clicking on the indicator 308 or the indicator 309. Based on the user input (clicking) a gallery of available digital 3D dental models, comprising the further digital 3D dental model, may be opened where the user may select the further digital 3D dental model. The further digital 3D dental model may be representative of the dental situation at a further time, wherein the further time is later than the first time and earlier than the second time. This is an example only, as the further time may alternatively be earlier than the first time or later than the second time. Once the user selection is received, the superimposed digital 3D dental model 301 updates with the new data. Additionally, the color scale 303 updates accordingly, as new highest value 304 and lowest value 305 are determined, as well as other threshold values in between the highest value 304 and the lowest value 305. The timeline 307 may also update accordingly, illustrating which digital 3D dental models (scans) are being compared.

When a new pair of scans is chosen by the user for comparison, the color scale 303 may animate, usually for few seconds, to give the user an indication that the threshold values are being re-calculated upon new selection of scans. This serves as a feedback mechanism to inform the user of the ongoing process of threshold values adjustment. This re-calculation of threshold values in real-time or near real-time may take into account quality of scan data and/or variability of the values of geometric differences. The size of the scan data and/or the variability of the values of geometric differences may increase calculation time for the threshold values.

In some cases the sub-range 306 may be so wide resulting in a large surface of the difference map being covered in a single color, thus making it difficult to observe severity distribution of the geometric differences on a more granular level. To counter that, the sub-ranges 306 may be split, for example each sub-range 306 may be split in two or more sub-ranges. In the example of FIG. 3, splitting sub-ranges 306 into two would result in total of eight new sub-ranges on the part of color scale 303 with positive values and eight new sub-ranges on the part of color scale 303 with negative values. In this way it is ensured that a single sub-range 306, represented by a single color, is not representative of the values of geometric differences spanning over a threshold for splitting sub-ranges. This threshold for splitting sub-ranges may be referred to also as a second threshold and may relate to a surface area of the superimposed digital 3D dental model 301. This second threshold may be pre-defined. Alternatively, the threshold for splitting sub-ranges may be adjustable by the user.

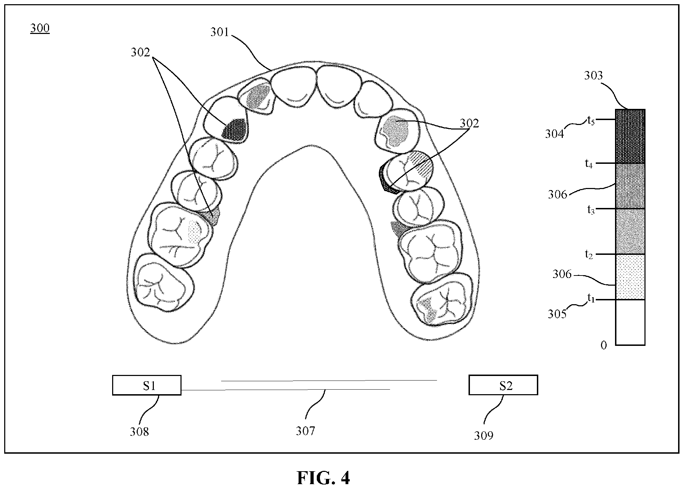

FIG. 4 illustrates the graphical user interface (GUI) 300 and therein a view of the difference map where the first digital 3D dental model 100 and the second digital 3D dental model 101 are compared on the jaw-level. The difference map in may comprise the superimposed digital 3D dental model 301 highlighting the geometric differences in tooth movement and/or gingiva movement between the first digital 3D dental model 100 and the second digital 3D dental model 101. As in the case of the difference map in FIG. 3, these differences may be highlighted by applying color overlays 302 to the locations of the superimposed digital 3D dental model 301 where the differences have been detected. It can be seen that the color overlays 302 are present both on the teeth of the superimposed digital 3D dental model 301, signifying movement of teeth, but also on the soft tissue (gingiva) of the superimposed digital 3D dental model 301. Measurements of tooth movement may be relevant for establishing patients bite functionality, diagnosing malocclusion, monitoring progress of orthodontic treatment or similar. Soft tissue movement measurements, such as measurements of movement of gingiva margin line, may be relevant for diagnosing gingival recession, gingivitis or periodontal disease. Different colors of the color scale 303 may be applied to the superimposed digital 3D dental model 301, depending on the identified values of the geometric differences. The superimposed digital 3D dental model 301 may be shown in occluded state or in a state where occlusal surfaces of one or both jaws are displayed, as is the case in FIG. 4.

The superimposed digital 3D dental model 301 in FIG. 4 illustrates differences in position of teeth and/or gingiva of the two digital 3D dental models 100, 101. Differences in individual tooth shape are not shown on the difference map of FIG. 4. This is due to the alignment of the first digital 3D dental model 100 and the second digital 3D dental model 101 in this case performed on the scan level, which may be referred to as global alignment. This global alignment may also be referred to as a model-to-model alignment, scan-to-scan alignment or jaw-to-jaw alignment. This type of alignment may be performed, for example, by performing a best-fit transformation in which centroids of corresponding teeth of the first digital 3D dental model and the second digital 3D dental model are overlapped. The best-fit transformation is a rigid transformation which, when applied to teeth centroids of the first digital 3D dental model, minimizes the sum of squared distances to teeth centroids of the second digital 3D dental model. This best-fit transformation may be regarded as a jaw-to-jaw alignment as it is computed on the jaw level and not on the level of individual teeth. The obtained jaw-to-jaw alignment may be fine-tuned by performing an Iterative Closest Point (ICP) method considering selected teeth, for example molars, of the two digital 3D dental models.

To generate the color scale 303 for the superimposed digital 3D dental model 301 in the example shown in FIG. 4, following steps may be carried out. The values of geometric differences between the first digital 3D dental model 100 and the second digital 3D dental model 101 may be determined. Out of those determined values, the maximum value and the minimum value may be identified. For example, the maximum value may be 2 millimeters and the minimum value may be 0.4 millimeters. A convention may be adopted that only absolute values of the geometric differences are considered, therefore the color scale 303 with only positive values of geometric differences may be generated. The maximum value is thus selected as the greatest value of geometric differences. The highest value 304 (ts) of the color scale 303 may thus be assigned the value of 2 millimeters. Other thresholds of the color scale 303 (e.g. t₄, t₃, t₂, t₁) may be determined automatically once the highest value 304 is assigned. The color scale 303 may in this case not be symmetric over the value zero as in case of FIG. 3 as only positive values are considered. Each sub-range 306 of values in the color scale 303 in between two thresholds may be equal. Number of sub-ranges in the color scale 303 may be predetermined (for example 5 sub-ranges as shown in FIG. 4).

It may be observed that the highest value 304 and the thresholds of the color scale 303 in FIG. 4 (e.g. t₄, t₃, t₂, t₁) are determined based on values of geometric differences between the two digital 3D dental models being compared. They are thus not pre-defined. Similar advantages are enabled by this feature to the ones already stated with respect to FIG. 3. Even the determined clinically-relevant differences, normally falling outside the range of a color scale with pre-set boundaries, can be captured and shown on the difference map according to the disclosure. This allows the users to discover and view the severe cases needing their attention, thus adding to clinical value of the difference map of the disclosure. Furthermore, once the highest value 304 is determined, other threshold values in between the highest value 304 and zero may be determined automatically. These threshold values therefore alter according to the digital 3D dental models being compared, removing any need for manual recalibration of thresholds. This greatly saves time and effort as the users can focus more on analyzing results of the difference map instead of spending time on configuration of the thresholds. Because the thresholds are always relevant to the specific pair of digital 3D dental models being compared, accuracy of data interpretation is improved. Moreover, users can immediately see relevant thresholds that adapt to the current digital 3D dental models being compared, making the graphical user interface 300 more intuitive.

On the color scale 303 of the FIG. 4 the sub-range 306 defined by values zero and t₁ represent "no change" state. Locations on the superimposed digital 3D dental model 301 corresponding to values of geometric differences within these sub-ranges may not be overlaid with a color and may instead be shown in the corresponding natural color. Alternatively, a color, for example green, may be used.

The color scale 303 of the FIG. 3 enables also values of geometric differences greater than t₅ to be shown on the superimposed digital 3D dental model 301, although not in a new color but in the color corresponding to the top-most sub-range 306.

FIG. 4 also shows a timeline 307 with indicators 308, 309 of digital 3D dental models being compared, as in the FIG. 3. Indicator 308 corresponds to the first digital 3D dental model 100 (S1 or scan 1), while the indicator 309 corresponds to the second digital 3D dental model 101 (S2 or scan 2). The indicators 308, 309 may be arranged in chronological order with the older scan arranged to the left of the timeline 307. This provides an intuitive view of the digital 3D dental models being compared as well as their corresponding time stamps. The user may hover over the indicators 308, 309 and obtain, for example in a pop-up, more information about the respective scan, including the scan date.

The user may decide to include the further digital 3D dental model into the comparison tool according to the disclosure. The user may thus select the further digital 3D dental model to be compared with the first digital 3D dental model 100 or with the second digital 3D dental model 101. This selection of the further digital 3D dental model may occur by user clicking on the indicator 308 or the indicator 309. Based on the user input (clicking) the gallery of available digital 3D dental models, comprising the further digital 3D dental model, may be opened where the user may select the further digital 3D dental model. The further digital 3D dental model may be representative of the dental situation at a further time, wherein the further time is later than the first time and earlier than the second time. This is an example only as the further time may alternatively be earlier than the first time or later than the second time. Once the user selection is received, the superimposed digital 3D dental model 301 updates with the new data. Additionally, the color scale 303 updates as new highest value 304 is determined, as well as other threshold values in between the highest value 304 and the value zero. The timeline 307 may update accordingly, illustrating which digital 3D dental models (scans) are being compared.

When a new pair of scans is chosen by the user for comparison, the color scale 303 may animate, usually for few seconds, to give the user an indication that the threshold values are being re-calculated upon new selection of scans. This serves as a feedback mechanism to inform the user of the ongoing process of threshold values adjustment. This re-calculation of threshold values in real-time or near real-time may take into account quality of scan data and/or variability of the values of geometric differences, as will be explained.

Similarly as described for implementation in FIG. 3, the sub-ranges may be split, for example each sub-range 306 may be split in two or more sub-ranges, if the initially obtained sub-ranges 306 are too wide which would cause difficulties in accurately pointing differences on the superimposed digital 3D dental model 301 which should be discernible from the clinical perspective. In the example of FIG. 4, splitting sub-ranges 306 into two would result in ten new sub-ranges on the color scale 303. In this way it is ensured that a single sub-range 306, represented by a single color, is not representative of the values of geometric differences spanning over a threshold for splitting sub-ranges. This threshold for splitting sub-ranges, referred to as the second threshold, may be the same as described for FIG. 3.

Overall, the difference maps shown in FIG. 3 and FIG. 4 provide users with data that is contextually adapted to diverse cases of digital 3D dental models being compared.

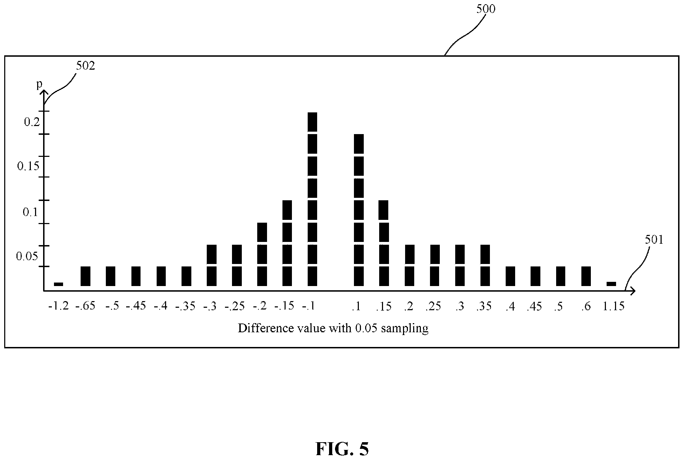

FIG. 5 illustrates a histogram 500 of frequencies for the values of geometric differences in the difference map, used for identifying outlier and noise data. There may be some challenges in identifying the greatest value of geometric differences in the values of geometric differences because noise and/or outlier data may be present. To counter this phenomenon a filter may be set up to cut off the obsolete data and find a useful bound. This filter may be set up and used for calculating the greatest value of geometric differences in the dataset of geometric differences. However, the filtered-out data may not be completely excluded from visualization. If the values of geometric differences are outside of obtained filtered bound, they may still be visualized on the superimposed digital 3D dental model 301 using the closest color on the color scale 303.

Horizontal axis 501 of the histogram 500 represents the identified values of geometric differences between the first digital 3D dental model 100 and the second digital 3D dental model 101, expressed in millimeters. Probabilities on the vertical axis 502 of the histogram 500 represent frequencies of occurrence for values on the horizontal axis 501, and thereby show how often each value occurs within the entire dataset of the values of geometric differences. The probabilities on the vertical axis 502 shown in FIG. 5 are normalized.

In the histogram 500 of FIG. 5 the values between -0.1 and 0.1, which represent no change/no color area, may be discarded because those values may be lower than a measuring precision of the intraoral scanner 701. This measuring precision may be received by the processor when the method of the disclosure is initated. The histogram 500 of the FIG. 5 is normally distributed and shows two outliers (-1.2 and 1.15) with low probability. These two outliers may therefore be excluded from calculations required to determine the color scale thresholds. Once the filtering is performed, the greatest value of geometric differences may be identified. In the histogram 500, the maximum value would be 0.6 millimeters and the minimum value would be -0.65 millimeters. By taking the absolute value of both the maximum value 304 and the minimum value 305 and identifying the greater value of the two, the greatest value of geometric differences may be determined. Thereby, rest of color scale thresholds may also be determined automatically, and optionally the color scale 303 may be made symmetrical. In this case, the maximum value 304 of the color scale 303 would be 0.65 millimeters and the minimum value 305 of the color scale 303 would be -0.65 millimeters. By dividing the obtained range by the pre-determined number of sub-ranges 306, the other threshold values of the color scale 303 may be obtained.

Next, a variance of the histogram 500 may be computed. For the histogram 500 of FIG. 5, the variance has a value of 0.001958. Subsequently, filtering may be performed using the computed variance or a portion of the computed variance. The portion of the computed variance may be obtained as: k * computed variance, k > 0. As an example, in the histogram 500 the values of geometric differences lower than -1.2 and greater than 1.15 are filtered out because their associated probabilities are lower than 0.001958. It may be pointed out that these values may still be available on the difference map and may be assigned the same color as to the maximum value 304 and/or to the minimum value 305.

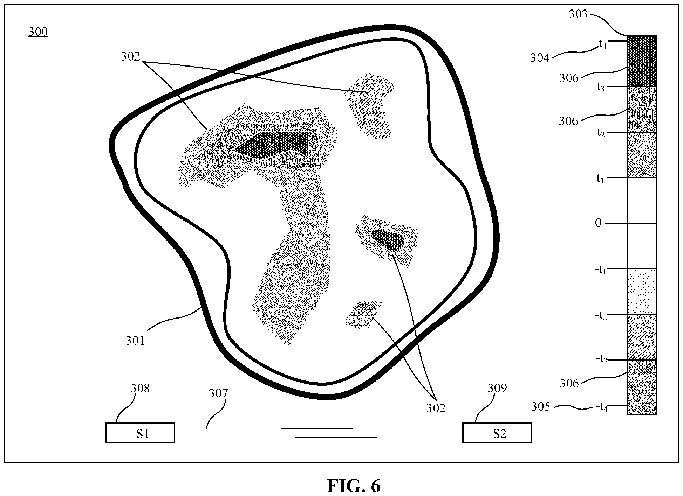

FIG. 6 illustrates the graphical user interface (GUI) 300 with a view of the difference map generated for the first digital 3D dental model 100 and the second digital 3D dental model 101 for comparison of individual teeth. FIG. 6 shows a zoomed-in view on a tooth of the superimposed digital 3D dental model 301 where color overlays 302 are applied to the locations where differences have been determined. The color scale 303 comprises the color scale thresholds specifically computed for the first digital 3D dental model 100 and the second digital 3D dental model 101. The color scale 303 may be split into a predetermined number of sub-ranges 306 (for example 8 as shown) to define which colors should be used for which values of geometric differences. The timeline 307 with the indicators 308, 309 illustrates which two of the digital 3D dental models are being compared.

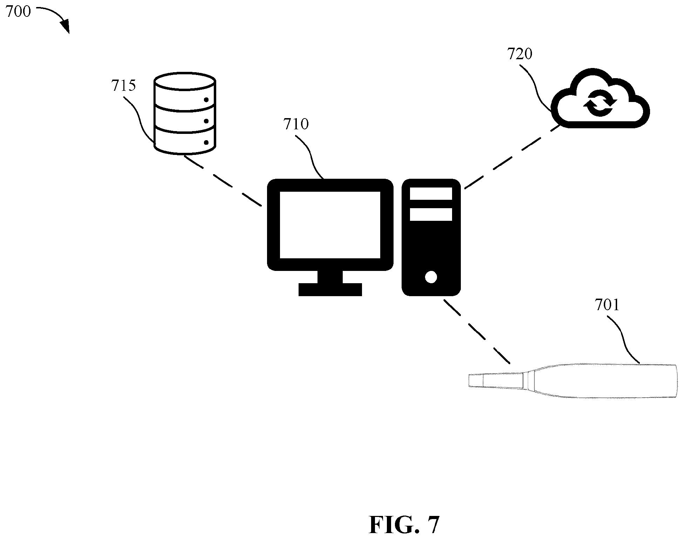

FIG. 7 illustrates a dental scanning system 700 which may comprise a computer 710 capable of carrying out any method of the disclosure. The computer 710 may comprise a wired or a wireless interface to a server 715, a cloud server 720 and the intraoral scanner 701. The intraoral scanner 701 may be equipped with various modules such as a fluorescence module and/or an infrared module and thus may be capable of recording the scan data comprising geometrical information, natural color information, infrared information and/or fluorescence information associated with the patient's dentition.

The dental scanning system 700 may comprise a data processing device configured to carry out the method according to one or more embodiments of the disclosure. The data processing device may be a part of the computer 710, the server 715 or the cloud server 720.

The data processing device may comprise means to carry out the method according to the disclosure.

The dental scanning system 700 may comprise the data processing device configured to:
- receive the first digital 3D dental model 100 representative of the dental situation at the first time,
- receive the second digital 3D dental model 101 representative of the dental situation at the second time, wherein the second time is later than the first time,
- generate the difference map based on the first digital 3D dental model 100 and the second digital 3D dental model 101, wherein generating the difference map comprises:
   - obtaining values of geometric differences between the first digital 3D dental model 100 and the second digital 3D dental model 101,
   - identifying the greatest value of geometric differences from the values of geometric differences,
   - generating the color scale 303 comprising the plurality of discrete colors associated with the values of geometric differences, wherein colors of the plurality of discrete colors are separated by color scale threshold values, further wherein the color scale threshold values are determined based on the greatest value of geometric differences,
   - assigning the plurality of discrete colors to the values of geometric differences, and
- display the difference map to visually highlight the values of geometric differences between the first digital 3D dental model 100 and the second digital 3D dental model 101.

A non-transitory computer-readable storage medium may be comprised in the dental scanning system 700. The non-transitory computer-readable medium can carry instructions which, when executed by a computer, cause the computer to carry out the method according to one or more embodiments of the disclosure.

The non-transitory computer-readable medium can carry instructions which, when executed by a computer, cause the computer to:
- receive the first digital 3D dental model 100 representative of the dental situation at the first time,
- receive the second digital 3D dental model 101 representative of the dental situation at the second time, wherein the second time is later than the first time,
- generate the difference map based on the first digital 3D dental model 100 and the second digital 3D dental model 101, wherein generating the difference map comprises:
   - obtaining values of geometric differences between the first digital 3D dental model 100 and the second digital 3D dental model 101,
   - identifying the greatest value of geometric differences from the values of geometric differences,
   - generating the color scale 303 comprising the plurality of discrete colors associated with the values of geometric differences, wherein colors of the plurality of discrete colors are separated by color scale threshold values, further wherein the color scale threshold values are determined based on the greatest value of geometric differences,
   - assigning the plurality of discrete colors to the values of geometric differences, and
- display the difference map to visually highlight the values of geometric differences between the first digital 3D dental model 100 and the second digital 3D dental model 101.

Further, a computer program product may be comprised in the dental scanning system 700. The computer program product can comprise instructions which, when the computer program product is executed by a computer, cause the computer to carry out the method according to one or more embodiments of the disclosure.

The computer program product can comprise instructions which, when the computer program product is executed by a computer, cause the computer to:
- receive the first digital 3D dental model 100 representative of the dental situation at the first time,
- receive the second digital 3D dental model 101 representative of the dental situation at the second time, wherein the second time is later than the first time,
- generate the difference map based on the first digital 3D dental model 100 and the second digital 3D dental model 101, wherein generating the difference map comprises:
   - obtaining values of geometric differences between the first digital 3D dental model 100 and the second digital 3D dental model 101,
   - identifying the greatest value of geometric differences from the values of geometric differences,
   - generating the color scale 303 comprising the plurality of discrete colors associated with the values of geometric differences, wherein colors of the plurality of discrete colors are separated by color scale threshold values, further wherein the color scale threshold values are determined based on the greatest value of geometric differences,
   - assigning the plurality of discrete colors to the values of geometric differences, and
- display the difference map to visually highlight the values of geometric differences between the first digital 3D dental model 100 and the second digital 3D dental model 101.

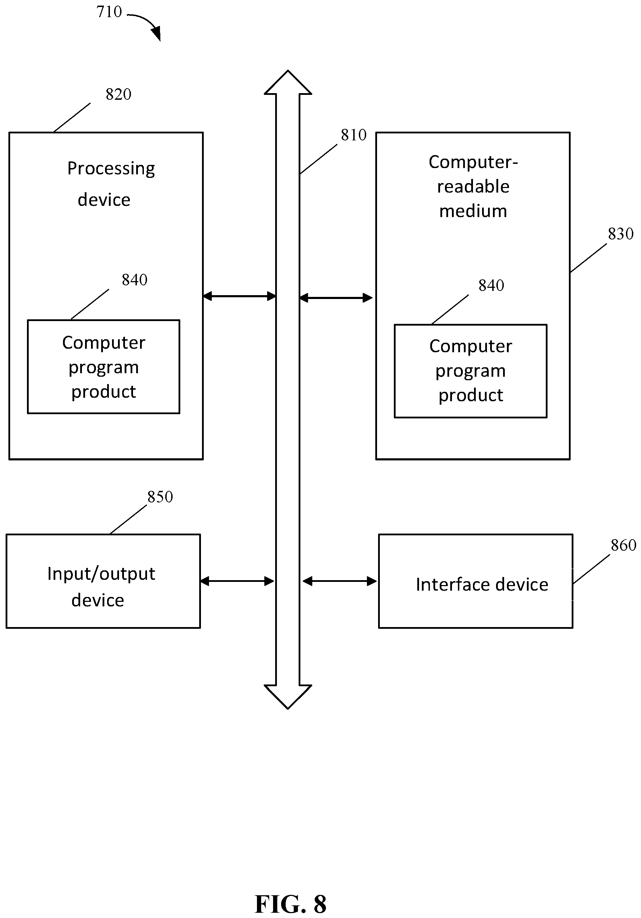

FIG. 8 illustrates an example of a computer architecture of the computer 710 capable of carrying out the method according to the disclosure.

Various components of the computer 710 may communicate via a bus 810. The computer 710 may comprise the data processing device 820 (referred to also as a processor or a processing device). The data processing device 820 may be any central processing unit (CPU), microprocessor, microcontroller, computational or programmable device or circuit configured for executing instructions to carry out the method of any one or more of the presented embodiments.

The computer program product 840, comprising the instructions to carry out the method of any one or more of the presented embodiments, may be stored on the data processing device 820. Alternatively or additionally, the computer program product 840, comprising the instructions to carry out the method of any one or more of the presented embodiments, may be stored on a computer-readable medium 830, more specifically on a non-transitory computer-readable medium 830. Examples of the computer-readable medium 830 include magnetic storage media such as a magnetic disk or magnetic tape, optical storage media such as an optical disc, optical tape, machine readable bar code, solid state electronic storage devices such as random access memory (RAM), read only memory (ROM), or any other physical device or medium configured to store the computer program product 840.

The computer 710 may further comprise an input/output device 850 such as a keyboard, a touchscreen, a microphone, a mouse, a display unit, a graphical user interface (GUI), a loudspeaker etc. The display unit of the computer 710 may be used for displaying the graphical user interface 300.

The computer 710 may be connected to the server 715, the cloud 720 and/or the intraoral scanner 701 via an interface device 860 which may be a wired and/or wireless communication interface device including Wi-Fi, Bluetooth, LAN, etc.

It is to be understood that embodiments may be made, other than those mentioned, and structural and functional modifications may be made without departing from the scope of the present invention.

## Claims

1. A computer-implemented method for comparing digital 3D dental models, the method comprising:
- receiving a first digital 3D dental model representative of a dental situation at a first time;
- receiving a second digital 3D dental model representative of the dental situation at a second time, wherein the second time is later than the first time;
- generating a difference map based on the first digital 3D dental model and the second digital 3D dental model; wherein generating of the difference map comprises:
a) obtaining values of geometric differences between the first digital 3D dental model and the second digital 3D dental model;
b) identifying a greatest value of geometric differences from the values of geometric differences;
c) generating a color scale comprising a plurality of discrete colors associated with the values of geometric differences, wherein colors of the plurality of discrete colors are separated by color scale threshold values, further wherein the color scale threshold values are determined based on the greatest value of geometric differences;
d) assigning the plurality of discrete colors to the values of geometric differences;
- displaying the difference map to visually highlight the values of geometric differences between the first digital 3D dental model and the second digital 3D dental model.

2. The method according to claim 1, wherein generating the difference map comprises generating a superimposed digital 3D dental model by aligning the first digital 3D dental model and the second digital 3D dental model.

3. The method according to the previous claim 2, wherein aligning the first digital 3D dental model and the second digital 3D dental model comprises performing a global alignment to determine absolute values of changes between the first digital 3D dental model and the second digital 3D dental model.

4. The method according to the previous claim 3, wherein the absolute values of changes represent changes in tooth movement and/or changes in soft tissue movement between the first digital 3D dental model and the second digital 3D dental model.

5. The method according to the previous claim 3 or 4, wherein the greatest value of geometric differences is identified based on the global alignment.

6. The method according to the previous claim 2, wherein aligning the first digital 3D dental model and the second digital 3D dental model comprises performing a local alignment where teeth of the first digital 3D dental model are individually aligned with corresponding teeth of the second digital 3D dental model.

7. The method according to the previous claim 6, wherein the greatest value of geometric differences is identified for teeth of the superimposed digital 3D dental model based on the local alignment.

8. The method according to any of the previous claims, wherein identifying the greatest value of geometric differences comprises:
- generating a histogram of frequencies for the values of geometric differences;
- computing a variance of frequencies based on the histogram of frequencies;
- obtaining filtered values of geometric differences by filtering the values of the geometric differences using at least a portion of the computed variance;
- identifying a minimum value and a maximum value from the filtered values of geometric differences;
- identifying an absolute maximum of the minimum value and the maximum value.

9. The method according to the previous claim 8, wherein filtering the values of the geometric differences using the at least portion of the computed variance comprises excluding, from the identification of the greatest value, those values of geometric differences with associated probability value lower than a first threshold.

10. The method according to the previous claim 9, wherein the first threshold is the at least portion of the computed variance.

11. The method according to any of the previous claims, wherein the color scale comprises a plurality of sub-ranges, wherein a discrete step in each sub-range of the plurality of sub-ranges corresponds to a measuring precision of an intraoral scanner used to scan the dental situation.

12. The method according to the previous claim 11, further comprising increasing a number of sub-ranges if a surface area of the difference map covered by a sub-range of the plurality of sub-ranges is greater than a second threshold value.

13. The method according to any previous claim, further comprising:
- receiving a user selection indicating a further digital 3D dental model for comparison;
- receiving a user selection indicating the first digital 3D dental model or the second digital 3D dental model for comparison with the further digital 3D dental model;
- generating a difference map based on the further digital 3D dental model and the first digital 3D dental model or the second digital 3D dental model; and
- displaying the difference map to visually highlight values of geometric differences between the further digital 3D dental model and the first digital 3D dental model or the second digital 3D dental model.

14. The method according to the previous claim 13, further comprising updating the color scale threshold values based on the differences between the further digital 3D dental model and the first digital 3D dental model or the second digital 3D dental model.

15. A computer-readable medium comprising instructions which, when executed by a computer, cause the computer to carry out the method according to any of the claims 1 to 14.
